# EUROPEAN PATENT APPLICATION

(11) **EP 3 779 756 A1**
(43) Date of publication of application: **17.02.2021**
(21) Application number: 19781564.0
(22) Date of filing: 28.01.2019
(51) Int. Cl.: G06F 21/62, G06F 12/00, G06F 21/55, H04L 9/32

(54) **INFORMATION PROCESSING DEVICE, INFORMATION PROCESSING METHOD, AND PROGRAM**

(30) Priority: 02.04.2018 JP 2018070788
(71) Applicant: Sony Corporation, 108-0075 Tokyo (JP)
(72) Inventor: TAKAHASHI, Koki, Tokyo 141-0031 (JP); WATANABE, Kazuhiro, Tokyo 141-0031 (JP); ISOZU, Masaaki, Tokyo 141-0031 (JP)
(74) Representative: 2SPL Patentanwälte PartG mbB
(86) International application number: PCT/JP2019/002741
(87) International publication number: WO 2019/193820

(57) **Abstract**

[Problem] It becomes possible to control access to a P2P database more appropriately.

[Solution] Provided is an information processing apparatus including an access control unit configured to control new access to a P2P database by arbitrary entity on a basis of history information regarding access to the P2P database by the entity.

## Description

### Field

The present disclosure relates to an information processing apparatus, an information processing method, and a program.

### Background

In recent years, service using a peer-to-peer database including blockchain data has been actively developed. Examples of the service can include, for example, Bitcoin, or the like, in which blockchain data is used to exchange virtual currency. With the peer-to-peer database including blockchain data, it is possible to prevent falsification, or the like, of registered data, and store registered data with high reliability by a mutual surveillance effect of nodes by a plurality of business operators.

Patent Literature 1 discloses a technology of performing access control to a peer-to-peer database on the basis of validation information (access validation information).

### Citation List

### Patent Literature

Patent Literature 1: JP 2008-72710 A

### Summary

### Technical Problem

Here, with the technology disclosed in Patent Literature 1, or the like, there is a case where access to the peer-to-peer database cannot be appropriately controlled. More specifically, because registered data cannot be basically deleted from the peer-to-peer database, if a certain user tries to register a large amount of data, there is a possibility that resources of the peer-to-peer database may be strained, and other users cannot register data. Further, with a registration scheme of registering data in the peer-to-peer database after consensus (agreement) is built among a plurality of node apparatuses, it requires a longer period to register data than that for a typical relational database, or the like. Therefore, in a case where a certain user requests registration of a large amount of data, there is a possibility that other users cannot register data. Here, by using the technology disclosed in Patent Literature 1, or the like, even if users who can access the peer-to-peer database on the basis of validation information (access validation information) are limited, in a case where a user who can access the peer-to-peer database registers a large amount of data, there is a possibility that other users cannot register data.

Therefore, the present disclosure has been made in view of the above-described circumstances, and provides a new and improved information processing apparatus, information processing method and program capable of controlling access to a peer-to-peer database more appropriately.

### Solution to Problem

According to the present disclosure, an information processing apparatus is provided that includes: an access control unit configured to control new access to a P2P database by arbitrary entity on a basis of history information regarding access to the P2P database by the entity.

Moreover, according to the present disclosure, an information processing method to be executed by a computer is provided that includes: controlling new access to a P2P database by arbitrary entity on a basis of history information regarding access to the P2P database by the entity.

Moreover, according to the present disclosure, a program is provided that causes a computer to realize: controlling new access to a P2P database by arbitrary entity on a basis of history information regarding access to the P2P database by the entity.

### Advantageous Effects of Invention

According to the present disclosure as described above, it becomes possible to control access to a peer-to-peer database more appropriately.

Note that the above-described effect is not necessarily restrictive, and any one of effects described in the present specification or any another effect obtainable from the present specification may be exhibited in addition to or in place of the above-described effect.

### Brief Description of Drawings

FIG. 1 is a view explaining outline of blockchain data which is one type of a peer-to-peer database.
FIG. 2 is a view explaining outline of blockchain data which is one type of a peer-to-peer database.
FIG. 3 is a view explaining outline of blockchain data which is one type of a peer-to-peer database.
FIG. 4 is a view explaining a configuration example of an information processing system according to a first embodiment.
FIG. 5 is a block diagram illustrating a functional configuration example of a node apparatus 100 according to the first embodiment.
FIG. 6 is a block diagram illustrating a functional configuration example of a client apparatus 200 according to the first embodiment.
FIG. 7 is a flowchart illustrating an example of processing flow regarding access control to a P2P database 120 according to the first embodiment.
FIG. 8 is a block diagram illustrating a functional configuration example of a node apparatus 100 according to the second embodiment.
FIG. 9 is a flowchart illustrating an example of processing flow regarding access control to a P2P database 120 according to the second embodiment.
FIG. 10 is a block diagram illustrating a hardware configuration example of an information processing apparatus 900 which realizes the node apparatus 100 or the client apparatus 200 according to the first embodiment or the second embodiment.

### Description of Embodiments

Favorable embodiments of the present disclosure will be described in detail with reference to the appended drawings. Note that, in the present specification and drawings, redundant description of a configuration element having substantially the same functional configuration is omitted by providing the same sign.

Note that the description will be given in the following order.
1. Outline of peer-to-peer database
2. First embodiment
   2.1. Outline
   2.2. System configuration example
   2.3. Functional configuration example of node apparatus 100
   2.4. Functional configuration example of client apparatus 200
   2.5. Processing flow
3. Second embodiment
   3.1. Functional configuration example of node apparatus 100
   3.2. Processing flow
4. Hardware configuration example
5. Remarks
6. Conclusion

### <1. Outline of peer-to-peer database>

Before embodiments of the present disclosure is described, first, outline of a peer-to-peer database will be described.

In an information processing system according to the present embodiment, a distributed peer-to-peer database which is distributed in a peer-to-peer network is utilized. Note that there is also a case where the peer-to-peer network is referred to as a peer-to-peer distributed file system. In the following description, there is a case where the peer-to-peer network will be expressed as a "P2P network", and the peer-to-peer database will be expressed as a "P2P database". Examples of the P2P database can include blockchain data which is distributed in the P2P network. Therefore, first, outline of a blockchain system will be described as an example.

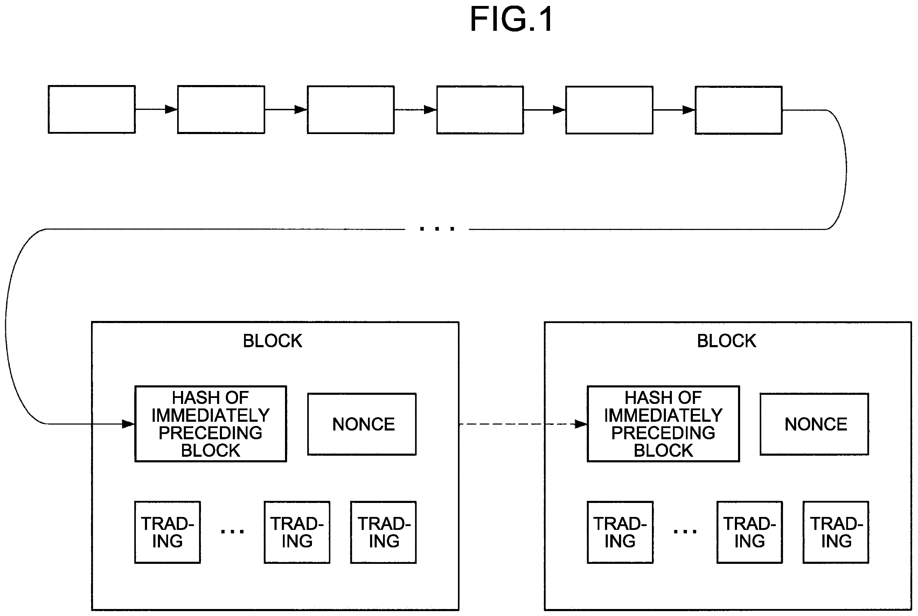

As illustrated in FIG. 1, the blockchain data is data in which a plurality of blocks is included like a chain. In each block, one or two or more pieces of target data can be stored as transaction (trading).

Examples of the blockchain data can include, for example, blockchain data to be used for exchanging data of virtual currency such as Bitcoin. The blockchain data to be used for exchanging data of virtual currency includes, for example, values called hash of an immediately preceding block, and a nonce. The hash of the immediately preceding block is information to be used for determining whether or not the block is a "correct block" correctly continuing from the immediately preceding block. The nonce is information to be used for preventing spoofing in authentication using the hash, and falsification is prevented by the use of the nonce. Examples of the nonce can include, for example, a character string, a number string, data indicating combination of these, or the like.

Further, in the blockchain data, spoofing is prevented by an electronic signature using an encryption key being provided to data of respective transactions. Further, the data of the respective transactions are made public and shared in the whole P2P network. Note that the data of the respective transactions may be encrypted using an encryption key.

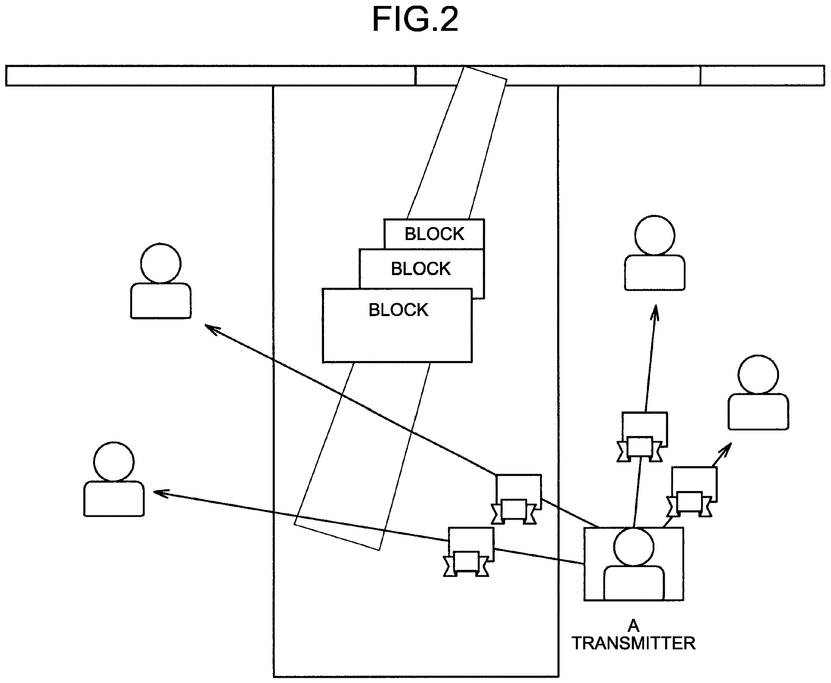

FIG. 2 is a view illustrating an aspect where target data is registered by a user A in the blockchain system. The user A provides an electronic signature generated using a private key of the user A to the target data to be registered in the blockchain data. Then, the user A broadcasts a transaction including the target data to which the electronic signature is provided on the P2P network. By this means, it is guaranteed that a holder of the target data is the user A.

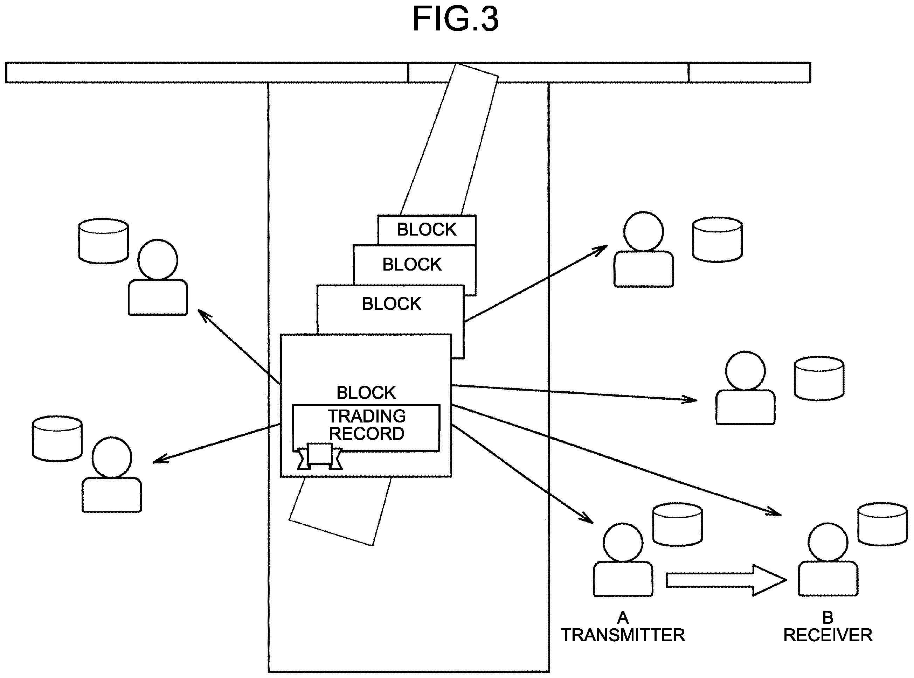

FIG. 3 is a view illustrating an aspect where the target data is transferred from the user A to a user B in the blockchain system. The user A puts a public key of the user B in a transaction by providing the electronic signature generated using the private key of the user A to the transaction. By this means, it is indicated that the target data is transferred from the user A to the user B. Further, the user B may acquire a public key of the user A from the user A to acquire the target data to which the electronic signature is provided or which is encrypted upon trading of the target data.

Further, in the blockchain system, it is also possible to put other target data different from virtual currency in the blockchain data to be used for exchanging existing data of virtual currency such as the blockchain data of Bitcoin, by utilizing, for example, a side chain technology.

### <2. First embodiment>

Outline of the P2P database has been described above. Subsequently, a first embodiment of the present disclosure will be described.

### (2.1. Outline)

First, outline of the first embodiment of the present disclosure will be described.

As described above, in recent years, service using a P2P database including blockchain data has been actively developed. Further, the P2P database is possible to prevent falsification, or the like, of registered data, and store registered data with high reliability by a mutual surveillance effect of nodes by a plurality of business operators.

However, with the technology disclosed in Patent Literature 1, or the like, there is a case where access to the P2P database cannot be appropriately controlled. For example, with the technology disclosed in Patent Literature 1, or the like, it is impossible to appropriately control the number of times of access to the P2P database, or the like, including registration of data in the P2P database, and acquisition of data from the P2P database.

Here, because registered data cannot be basically deleted from the P2P database, if a certain user tries to register a large amount of data, there is a possibility that resources of the P2P database may be strained, and other users cannot register data. Further, with a registration scheme of registering data in the P2P database after consensus (agreement) is built among a plurality of node apparatuses, it requires a longer period to register data than that for a typical relational database, or the like. Therefore, in a case where a certain user requests registration of a large amount of data, there is a possibility that other users cannot register data.

Thus, in view of the above-described circumstances, a discloser of the present disclosure has reached creation of the technology according to the present disclosure. According to the present disclosure, it is possible to control new access to a P2P database by arbitrary entity on the basis of history information regarding access to the P2P database by the entity. The present disclosure will be described in detail below.

### (2.2. System configuration example)

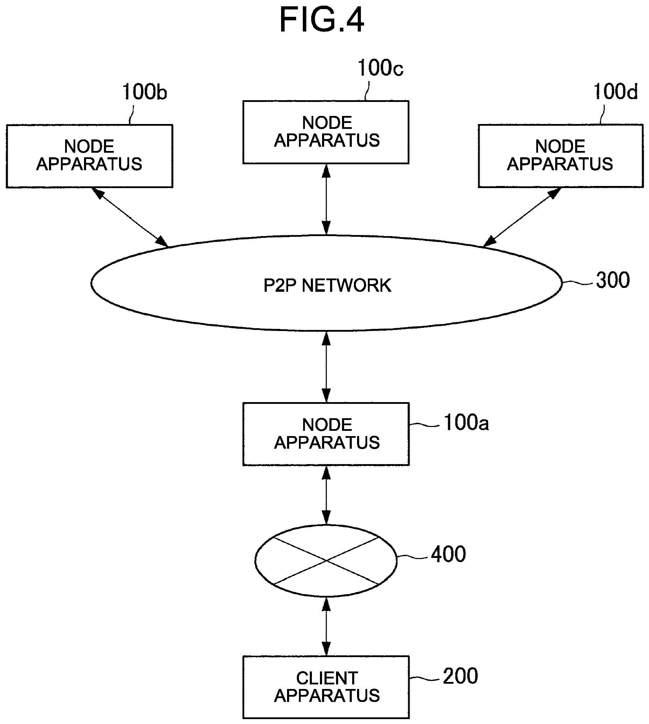

The outline of the present embodiment has been described above. Subsequently, a configuration example of an information processing system according to the present embodiment will be described with reference to FIG. 4.

As illustrated in FIG. 4, the information processing system according to the present embodiment includes a plurality of node apparatuses 100 (in the drawing, node apparatuses 100a to 100d), and a client apparatus 200. Further, the plurality of node apparatuses 100 is respectively connected to a P2P network 300. Still further, one of the plurality of node apparatuses 100 (in the drawing, the node apparatus 100a) is connected to the client apparatus 200 with a network 400.

### (Node apparatus 100)

The node apparatus 100 is an information processing apparatus which is connected to the P2P network 300 and which holds a P2P database. Further, the node apparatus 100 can control new access to the P2P database by arbitrary entity on the basis of history information regarding access to the P2P database by the entity. For example, the node apparatus 100 can decide whether or not to allow new access to the P2P database on the basis of the history information.

Here, while the "arbitrary entity" assumes one of a user (for example, a user who utilizes the present information processing system), a group constituted with a plurality of users (such as, for example, an organization and a group), the client apparatus 200 to be used by the user, or the like, an external apparatus other than the client apparatus 200, a system constituted with a plurality of external apparatuses (or the client apparatus 200), and software to be used by the external apparatus (or the client apparatus 200), the arbitrary entity is not limited to these. For example, the "arbitrary entity" can include tangible entity or intangible entity which can perform some kind of processing on the P2P database. Hereinafter, an example of a case will be described where the "arbitrary entity" is a user who uses the client apparatus 200.

Further, while the "access to the P2P database" assumes one of registration of data in the P2P database and acquisition of data from the P2P database, the access to the P2P database is not limited to these. More specifically, the "access to the P2P database" can include some kind of processing to be performed on the P2P database.

Further, while the "history information regarding access to the P2P database" assumes one of the total number of times of access to the P2P database performed in the past, the total number of times of access to the P2P database in a period of a predetermined length (for example, one day) (frequency of access), a total size of data registered in the P2P database in the past (or data acquired from the P2P database in the past), and a total size of data registered in the P2P database in a period of a predetermined length (for example, one day) (or a total size of data acquired from the P2P database in a period of a predetermined length), the history information regarding access to the P2P database is not limited to these. Note that, hereinafter, the "history information regarding access to the P2P database" will be also referred to as "access history information" for descriptive purpose.

Processing regarding access control to the P2P database by the node apparatus 100 will be described in detail later.

Here, in a case where the node apparatus 100 accesses the P2P database (that is, in a case where the node apparatus 100 performs acquisition, registration, or the like, of data), the node apparatus 100 basically uses a predetermined program which is provided at the P2P database and which is to be executed on the P2P database (hereinafter, referred to as a "P2P database program" for descriptive purpose). By the P2P database program being used, for example, various kinds of processing including exchange of virtual currency such as Bitcoin is realized in accordance with a predetermined rule. Further, by the P2P database program being provided at the P2P database, a risk of the program being fraudulently modified is reduced.

While the P2P database program is a chain code in Hyperledger, the P2P database program is not limited to this. For example, the P2P database program may indicate a smart contract. Note that the node apparatus 100 may realize access to the P2P database using a program other than the P2P database program as appropriate.

Further, while, in the present embodiment, description will be provided assuming a case where a plurality of node apparatuses 100 has the same functions, the respective node apparatuses 100 may have functions different from each other. For example, it is also possible to provide a node apparatus 100 (such as, for example, an Endorsing Peer) which approves registration of data in the P2P database, a node apparatus 100 (such as, for example, an Ordering Peer) which instructs the respective node apparatuses 100 to perform registration after approval, and a node apparatus 100 (such as, for example, a Committing Peer) which registers data in the P2P database.

Note that processing content of the node apparatus 100 described above can be changed as appropriate. Further, content of data to be registered in the P2P database provided at the node apparatus 100 is not particularly limited. Still further, a type of the node apparatus 100 is not particularly limited. For example,
the node apparatus 100 may be an arbitrary apparatus such as a general-purpose computer, a personal computer (PC) and a tablet PC.

### (Client apparatus 200)

The client apparatus 200 is an information processing apparatus to be used by a user who requests access to the P2P database to the node apparatus 100. For example, the user performs input operation for requesting registration of data in the P2P database, acquisition of data from the P2P database, or the like, on the client apparatus 200. Then, the client apparatus 200 generates a request signal on the basis of the input operation and realizes registration of data in the P2P database or acquisition of data from the P2P database by transmitting the signal to the node apparatus 100.

Further, in a case where the client apparatus 200 receives information regarding a result of processing based on the request (hereinafter, also referred to as "request result information" for descriptive purpose) from the node apparatus 100, the client apparatus 200 can provide the information to the user. More specifically, the client apparatus 200 can provide the request result information to the user via an output unit (such as, for example, a display apparatus such as a display, a sound output apparatus such as a speaker, a light source apparatus such as a lamp and a tactile sense presentation apparatus such as an actuator) which functions as a user interface.

Note that processing content of the client apparatus 200 described above can be changed as appropriate. Further, in a similar manner to the node apparatus 100, a type of the client apparatus 200 is not particularly limited. Further, the client apparatus 200 may be replaced with an arbitrary external apparatus (such as, for example, a server apparatus) which can perform communication with the node apparatus 100.

### (P2P network 300)

The P2P network 300 is a network on which the P2P databases are distributed. As described above, the respective node apparatuses 100 can update the P2P databases by connecting the P2P network 300 while maintaining consistency with the P2P databases held by other node apparatuses 100.

Note that a type of the P2P network 300 is not particularly limited. For example, the P2P network 300 may be one of a consortium type operated by a plurality of organizations, a private type operated by a single organization and a public type for which participants are not particularly limited.

Note that a communication scheme, a type of a line, or the like, to be used in the P2P network 300 is not particularly limited. For example, the P2P network 300 may be realized with a leased line network such as an Internet protocol-virtual private network (IP-VPN). Further, the P2P network 300 may be realized with a public network such as the Internet, a telephone network, and a satellite communication network. Furthermore, the P2P network 300 may be realized with various kinds of local area networks (LANs) including Ethernet (registered trademark), a wide area network (WAN), or the like. Still further, the P2P network 300 may be realized with a wireless communication network such as Wi-Fi (registered trademark) or Bluetooth (registered trademark).

### (Network 400)

The network 400 is a network which connects between the node apparatus 100 and the client apparatus 200. Note that, in a similar manner to the P2P network 300, a communication scheme, a type of a line, or the like to be used at the network 400 is not particularly limited.

The configuration example of the information processing system according to the present embodiment has been described above. Note that the above-described configuration described with reference to FIG. 4 is merely an example, and the configuration of the information processing system according to the present embodiment is not limited to this example. For example, all or part of the functions of the node apparatus 100 may be provided at the client apparatus 200. More specifically, software which provides all or part of the functions of the node apparatus 100 may be executed on the client apparatus 200. Further, inversely, all or part of the functions of the client apparatus 200 may be provided at the node apparatus 100. Further, the number of respective apparatuses which constitute the information processing system may be changed as appropriate. Further, content of service which can be provided by the information processing system according to the present embodiment is not particularly limited. The configuration of the information processing system according to the present embodiment can be flexibly transformed in accordance with specifications and operation.

### (2.3. Functional configuration example of node apparatus 100)

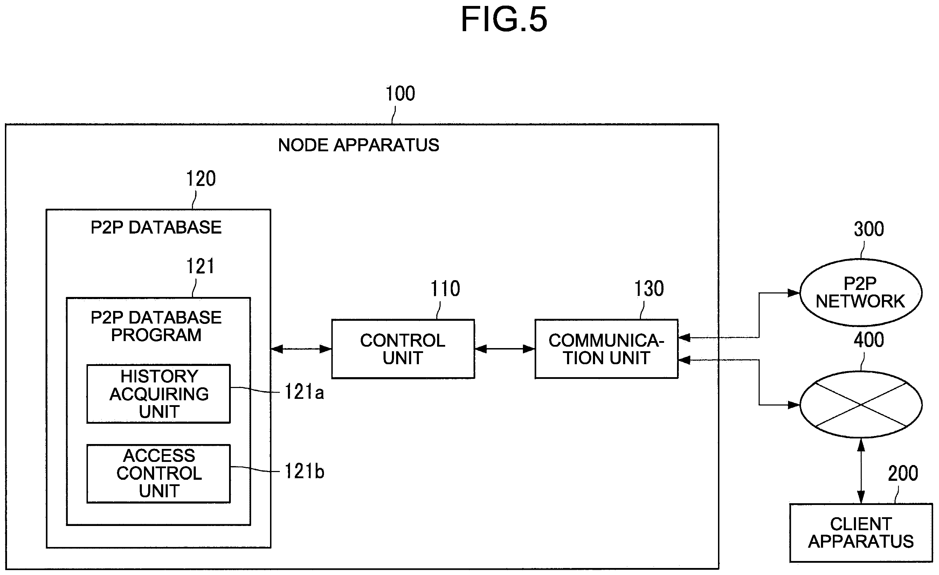

The configuration example of the information processing system according to the present embodiment has been explained in the above description. Subsequently, a functional configuration example of the node apparatus 100 will be described with reference to FIG. 5.

As illustrated in FIG. 5, the node apparatus 100 includes a control unit 110, a P2P database 120 and a communication unit 130.

### (Control unit 110)

The control unit 110 is a functional component which comprehensively controls overall processing performed by the node apparatus 100. For example, the control unit 110 can control start-up and stop of an output unit (not illustrated), the communication unit 130, or the like, using a control signal. Further, the control unit 110 generates a response signal including the request result information regarding access to the P2P database 120 (note that, in a case where content of the request from the client apparatus 200 is acquisition of data from the P2P database 120, the acquired data is also included in the response signal), and transmits the signal to the client apparatus 200 via the communication unit 130. Note that control content of the control unit 110 is not limited to these. For example, the control unit 110 may control processing which is typically performed at various kinds of servers, a general-purpose computer, a PC, a tablet PC, or the like.

### (P2P database 120)

The P2P database 120 is a database held by the node apparatus 100, and is, for example, blockchain data. As described above, in the P2P database 120, data of higher importance such as data for which guaranty for authenticity is asked is registered. An electronic signature generated using an encryption key may be provided to various kinds of data to be registered in the P2P database 120 or the data may be encrypted using an encryption key. Note that as described above, content of the data to be registered in the P2P database 120 is not particularly limited. For example, in a case where charging is performed when data is registered in the P2P database 120 or when data is acquired from the P2P database 120, data regarding assets possessed by each user (for example, coins in Bitcoin) may be registered in the P2P database 120. In addition, as illustrated in FIG. 5, the P2P database 120 includes a P2P database program 121.

### (P2P database program 121)

The P2P database program 121 is a predetermined program which is provided at the P2P database 120 and which is to be executed on the P2P database 120. As described above, by the P2P database program 121 being used, various kinds of processing including exchange of virtual currency such as, for example, Bitcoin is realized in accordance with a predetermined rule while consistency is maintained. Further, by the P2P database program 121 being provided at the P2P database 120, a risk of the program being fraudulently modified is reduced. Further, as described above, while the P2P database program 121 may be a chain code at Hyperledger, and may be a smart contract.

The P2P database program 121 can realize overall processing to be performed for the P2P database 120. For example, as illustrated in FIG. 5, the P2P database program 121 includes a history acquiring unit 121a and an access control unit 121b, and can realize overall processing regarding access to the P2P database 120 by controlling these. Note that the processing to be realized by the P2P database program 121 is not limited to this. In addition, development language of the P2P database program 121, the number of P2P database programs 121 provided on the P2P database 120, or the like, are not particularly limited.

### (History acquiring unit 121a)

The history acquiring unit 121a is a functional component which acquires access history information to be used for access control to the P2P database 120. More specifically, every time a request signal for requesting access to the P2P database 120 is received from the client apparatus 200, the history acquiring unit 121a tallies access history information regarding access to the P2P database 120 performed by the user in the past. For example, the history acquiring unit 121a outputs a total value of the number of times of registration by extracting data registered by the user in the past from data registered in the P2P database 120, on the basis of identification information of the user (such as, for example, a user ID and public key information), and tallying the number of times of registration. Here, history information regarding each time of a plurality of times of access to the P2P database 120 performed in the past (access history information) will be also referred to as "first history information", and access history information obtained by tallying the first history information will be also referred to as "second history information". That is, every time a request signal is received from the client apparatus 200, the history acquiring unit 121a of the present embodiment extracts the first history information on the basis of the data registered in the P2P database 120 and outputs the second history information using the first history information.

Note that, as described above, while the second history information assumes one of the total number of times of access to the P2P database 120 performed in the past, the total number of times of access to the P2P database 120 in a period of a predetermined length (for example, one day) (or frequency of access), a total size of data registered in the P2P database 120 in the past (or data acquired from the P2P database 120 in the past), and a total size of data registered in the P2P database 120 in a period of a predetermined length (for example, one day) (or a total size of data acquired from the P2P database 120 in a period of a predetermined length), the history information regarding access to the P2P database 120 is not limited to these.

Note that, while a case has been described above where the history acquiring unit 121a extracts the first history information on the basis of the data registered in the P2P database 120, an extraction method of the first history information is not limited to this. For example, in a case where there exists a storage unit, or an external apparatus, or the like, which manages the first history information, the history acquiring unit 121a may acquire the first history information from the storage unit, or the external apparatus, or the like.

The history acquiring unit 121a enables the access control unit 121b to control new access to the P2P database 120 by the user using the second history information by providing the output second history information to the access control unit 121b. Note that the history acquiring unit 121a may provide the first history information to the access control unit 121b.

### (Access control unit 121b)

The access control unit 121b is a functional component which controls new access to the P2P database 120 on the basis of the access history information. For example, the access control unit 121b decides whether or not to allow new access to the P2P database 120 on the basis of the access history information.

More specifically, in a case where a request signal for requesting access to the P2P database 120 is received from the client apparatus 200, the access control unit 121b decides whether or not to allow new access to the P2P database 120 by comparing the second history information provided from the history acquiring unit 121a with a predetermined threshold. For example, the access control unit 121b can prohibit access exceeding a predetermined threshold by comparing the total number of times of access to the P2P database 120 in a period of a predetermined length (for example, one day) which is the second history information, with the predetermined threshold.

Further, the access control unit 121b may control new access to the P2P database 120 in accordance with a type of data for which the P2P database 120 is to be accessed (data which is to be registered, data which is to be acquired, or the like), a type of a user (or entity) which accesses the P2P database 120, or the like, (in other words, the access control unit 121b may change control logic of new access to the P2P database 120 in accordance with a type of data or a type of a user.)

Here, while the "type of data" assumes a category, content or application of data for which the P2P database 120 is to be accessed, or an acquisition apparatus, or the like of the data, the type of data is not necessarily limited to these. For example, the "type of data" includes some kind of meta-information, or the like, regarding the data. By this means, the access control unit 121b may, for example, set different values for the number of times that registration is possible between data whose category is "temperature data" and data whose category is "pulse data". Further, the access control unit 121b may, for example, set different values for the number of times that registration is possible between data acquired by an apparatus A and data acquired by an apparatus B.

Further, while the "type of a user (entity)" assumes authority of a user (entity) who requests access to the P2P database 120 (such as, for example, administrator authority, premium user authority and general user authority), a role (such as, for example, a poster, a reader, a teacher and a student), attribute (such as, for example, age, gender and occupation), assessment for the user (such as, for example, academic results), or the like, the type of the user is not necessarily limited to these. For example, the "type of a user (entity)" includes some kind of meta-information, or the like, regarding the user (entity). By this means, the access control unit 121b may, for example, set different values for the number of times that registration is possible between data from a user who has "premium user authority" and data from a user who has "general user authority". By this means, the access control unit 121b can control access to the P2P database 120 more finely.

Note that a method for access control by the access control unit 121b is not limited to those described above, and the access control unit 121b can control access to the P2P database 120 using various kinds of control logic. For example, the access control unit 121b may change control logic for access control on the basis of a status of access to the P2P database 120. More specifically, the access control unit 121b may recognize a congestion situation, or the like, of access to the P2P database 120 using a predetermined method and may change control logic (such as, for example, change the predetermined threshold described above) so as to further limit access in a case where there is more access.

Further, the access control unit 121b may control access to the P2P database 120 using the first history information (that is, access history information before tallying) instead of using the second history information. Further, the access control unit 121b may realize all or part of processing regarding access control to the P2P database 120 using a publicly known machine learning technology or artificial intelligence.

### (Communication unit 130)

The communication unit 130 is a functional component which performs various kinds of communication with the client apparatus 200. For example, the communication unit 130 receives a request signal for requesting registration of data in the P2P database 120 from the client apparatus 200 and transmits a response signal including request result information, or the like, to the client apparatus 200. Further, the communication unit 130 receives a request signal for requesting acquisition of data from the P2P database 120 from the client apparatus 200 and transmits a response signal including the data acquired from the P2P database 120 and request result information, or the like, to the client apparatus 200.

In addition, the communication unit 130 also performs various kinds of communication with the node apparatus 100. For example, the communication unit 130 transmits and receives information, or the like, to be used for updating of the P2P database 120 (such as, for example, information to be used for consensus building) in communication with other node apparatuses 100 as appropriate. Note that data to be communicated by the communication unit 130 and a case where the communication unit 130 performs communication are not limited to these.

The functional configuration example of the node apparatuses 100 has been described above. Note that the above-described functional configuration described using FIG. 5 is merely an example, and the functional configuration example of the node apparatuses 100 is not limited to this example. For example, the node apparatuses 100 does not necessarily have to include all the components illustrated in FIG. 5. Further, a plurality of node apparatuses 100 connected to the P2P network 300 may include functional components which are different from each other. Further, the history acquiring unit 121a or the access control unit 121b described above may be provided at a unit other than the P2P database program 121. For example, the history acquiring unit 121a or the access control unit 121b may be provided at the control unit 110. Further, while not illustrated in FIG. 5, the node apparatus 100 may separately include a storage unit other than the P2P database 120. Further, the storage unit may be able to store programs, parameters, or the like, to be used by respective functional components of the node apparatus 100. Note that content of information to be stored in the storage unit is not limited to these. Further, the functional configuration of the node apparatus 100 can be flexibly transformed in accordance with specifications and operation.

### (2.4. Functional configuration example of client apparatus 200)

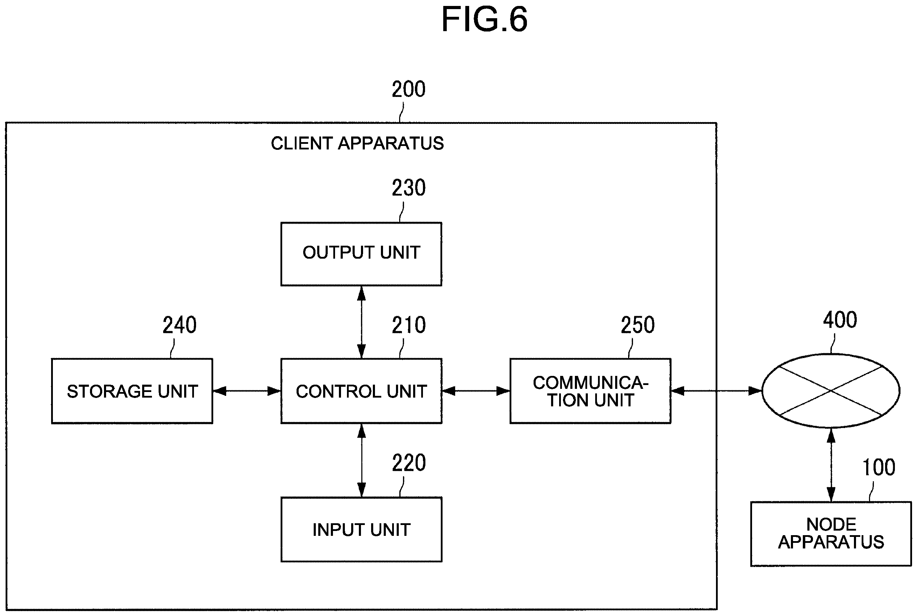

The functional configuration example of the node apparatus 100 has been described above. Subsequently, a functional configuration example of the client apparatus 200 will be described with reference to FIG. 6.

As illustrated in FIG. 6, the client apparatus 200 includes a control unit 210, an input unit 220, an output unit 230, a storage unit 240, and a communication unit 250.

### (Control unit 210)

The control unit 210 is a functional component which comprehensively controls overall processing to be performed by the client apparatus 200. For example, the control unit 210 can control start-up and stop of the input unit 220, the output unit 230, the communication unit 250, or the like, using a control signal. Further, the control unit 210 generates a request signal for requesting access to the P2P database 120. Further, in a case where a response signal including request result information, or the like, is provided by the node apparatus 100, the control unit 210 controls output of the information. Note that control content of the control unit 210 is not limited to these. For example, the control unit 210 may control processing which is typically performed at various kinds of servers, a general-purpose computer, a PC, a tablet PC, or the like.

### (Input unit 220)

The input unit 220 is a functional component which receives input by a user. For example, the input unit 220 includes an input apparatus such as a mouse, a keyboard, a touch panel, a button, a switch and a microphone, and, the user can perform input operation for requesting access to the P2P database 120, or the like, by using these input apparatuses. For example, the user can create data to be registered in the P2P database 120 by using these input apparatuses. Note that the input apparatus provided at the input unit 220 is not particularly limited.

### (Output unit 230)

The output unit 230 is a functional component which outputs various kinds of information by being controlled by the control unit 210. For example, the output unit 230 includes a display apparatus such as a display, a sound output apparatus such as a speaker, a light source apparatus such as a lamp, a tactile sense presentation apparatus such as an actuator, or the like, and outputs request result information, or the like, provided from the node apparatus 100 to the user on the basis of control by the control unit 210. That is, the output unit 230 functions as a user interface. Note that output apparatuses provided at the output unit 230 are not limited to these.

### (Storage unit 240)

The storage unit 240 is a functional component which stores various kinds of information. For example, the storage unit 240 stores data to be registered in the P2P database 120, data acquired from the P2P database 120, request result information, or the like, or stores programs, parameters, or the like, to be used by respective functional components of the client apparatus 200. Note that the information stored in the storage unit 240 is not limited to these.

### (Communication unit 250)

The communication unit 250 is a functional component which performs various kinds of communication with the node apparatus 100. For example, the communication unit 250 transmits a request signal for requesting registration of data in the P2P database 120 to the node apparatus 100 and receives a response signal including request result information, or the like, from the node apparatus 100. Further, the communication unit 250 transmits a request signal for requesting acquisition of data from the P2P database 120 to the node apparatus 100 and receives a response signal including the data acquired from the P2P database 120, request result information, or the like, from the node apparatus 100. Note that data to be communicated by the communication unit 250 and a case where the communication unit 250 performs communication are not limited to these.

The functional configuration example of the client apparatus 200 has been described above. Note that the above-described functional configuration described using FIG. 6 is merely an example, and the functional configuration example of the client apparatus 200 is not limited to this example. For example, the client apparatus 200 does not necessarily have to include all the components illustrated in FIG. 6. Further, the functional configuration of the client apparatus 200 can be flexibly transformed in accordance with specifications and operation.

### (2.5. Processing flow)

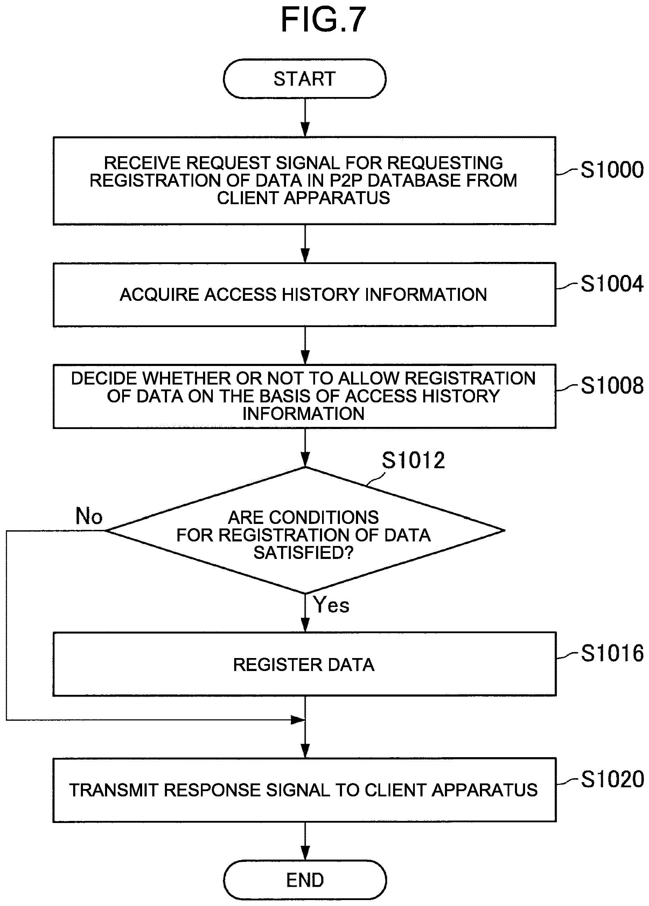

The functional configuration example of the client apparatus 200 has been explained in the above description. Subsequently, processing flow regarding access control to the P2P database 120 will be described with reference to FIG. 7. FIG. 7 is a flowchart illustrating an example of processing regarding access control to be performed when data is registered in the P2P database 120.

In step S1000, the communication unit 130 of the node apparatus 100 receives a request signal for requesting registration of data in the P2P database 120 from the client apparatus 200. In step S1004, the history acquiring unit 121a acquires access history information (second history information). In step S1008, the access control unit 121b decides whether or not to allow registration of data in the P2P database 120 on the basis of the access history information. For example, the access control unit 121b decides whether or not to allow registration of new data by comparing the total number of times of registration of data in the P2P database 120 in a period of a predetermined length (for example, one day), which is the access history information, with a predetermined threshold.

In a case where it is decided that conditions for registration of data in the P2P database 120 are satisfied on the basis of the access history information (step S1012: Yes), in step S1016, the access control unit 121b registers data in the P2P database 120. In step S1020, a series of processing is finished by the control unit 110 generating a response signal including request result information indicating that data registration is successful and transmitting the signal to the client apparatus 200 via the communication unit 130. Note that, in a case where it is decided in step S1012 that the conditions for registration of data in the P2P database 120 are not satisfied on the basis of the access history information (step S1012: No), in step S1020, the control unit 110 generates a response signal including request result information indicating that data registration is failed and transmits the signal to the client apparatus 200 via the communication unit 130 without data registration being performed.

Note that respective steps in the flowchart in FIG. 7 do not necessarily have to be processed in chronological order in accordance with the described order. That is, the respective steps in the flowchart may be processed in order different from the described order or may be processed in parallel.

### <3. Second embodiment>

The first embodiment of the present disclosure has been described above. Subsequently, a second embodiment of the present disclosure will be described.

The node apparatus 100 according to the first embodiment of the present disclosure outputs the second history information by tallying access to the P2P database 120 performed in the past every time a request signal is received from the client apparatus 200. Meanwhile, the node apparatus 100 according to the second embodiment of the present disclosure outputs second history information by tallying access to the P2P database 120 performed in the past in advance and registers the second history information in the P2P database 120. Then, in a case where a request signal is received from the client apparatus 200, the node apparatus 100 controls new access to the P2P database 120 using the second history information output in advance and registered in the P2P database 120. By this means, it is possible to shorten a period from a time when a request signal is received from the client apparatus 200 until the node apparatus 100 performs access control to the P2P database 120 (decides whether or not to allow access).

### (3.1. Functional configuration example of node apparatus 100)

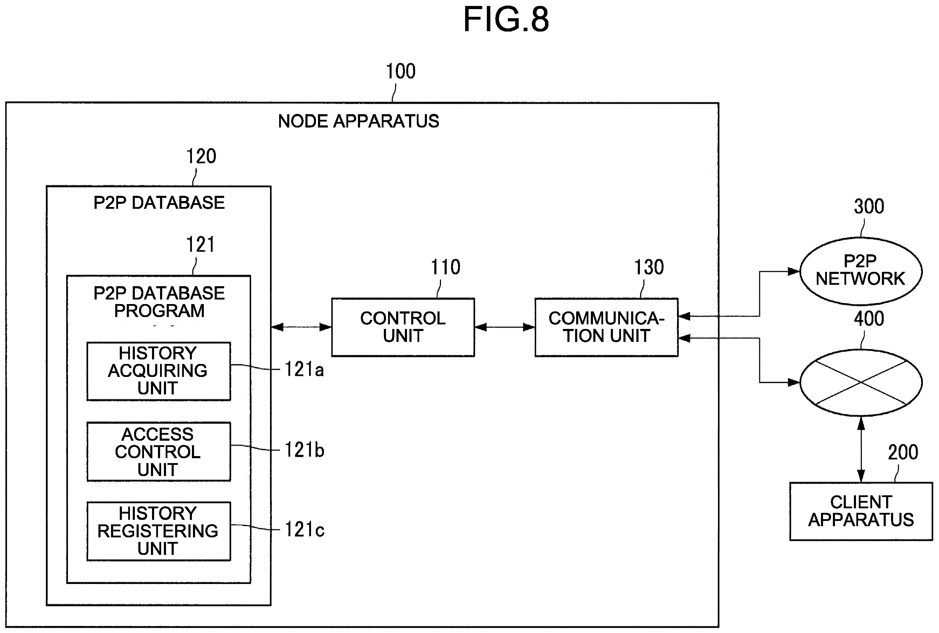

Subsequently, a functional configuration example of the node apparatus 100 according to the present embodiment will be described with reference to FIG. 8. Note that, in the following, the description will be omitted regarding content similar to the functional configuration according to the first embodiment. Note that, because functional configurations of the client apparatus 200 can be similar to the functional configurations according to the first embodiment described above, the description will be omitted.

As illustrated in FIG. 8, the P2P database program 121 of the node apparatus 100 according to the present embodiment newly includes a history registering unit 121c compared to the functional configuration of the first embodiment.

### (History acquiring unit 121a)

The history acquiring unit 121a according to the first embodiment outputs second history information by tallying history information (first history information) regarding access to the P2P database 120 performed in the past every time a request signal is received from the client apparatus 200. Meanwhile, the history acquiring unit 121a according to the present embodiment outputs the second history information in advance prior to reception of a request signal from the client apparatus 200.

A timing or a trigger for the history acquiring unit 121a to output the second history information is not particularly limited. For example, the history acquiring unit 121a may output the second history information when immediately preceding access by the same user (entity) occurs. More specifically, the history acquiring unit 121a may update the second history information output in the past in preparation for occurrence of the next access in a case where access to the P2P database 120 occurs. Further, the history acquiring unit 121a may periodically output the second history information. Further, the history acquiring unit 121a may output the second history information by being triggered by input operation (instruction) from an administrator of the node apparatus 100.

The history acquiring unit 121a provides the output second history information to the history registering unit 121c.

### (History registering unit 121c)

The history registering unit 121c is a functional component which registers the second history information in the P2P database 120. More specifically, in a case where the second history information is provided from the history acquiring unit 121a, the history registering unit 121c registers the second history information in the P2P database 120. By this means, authenticity of the second history information is guaranteed.

Note that the history registering unit 121c does not necessarily have to register second history information in the P2P database 120 in a case where the second history information is provided from the history acquiring unit 121a. For example, the history registering unit 121c may register second history information in the P2P database 120 only in a case where conditions for restricting new access to the P2P database 120 by a target user (entity) are satisfied by analyzing the second history information provided from the history acquiring unit 121a. By this means, the history registering unit 121c can prevent history information which does not affect decision as to whether or not to allow access to the P2P database 120 from being registered in the P2P database 120.

### (3.2. Processing flow)

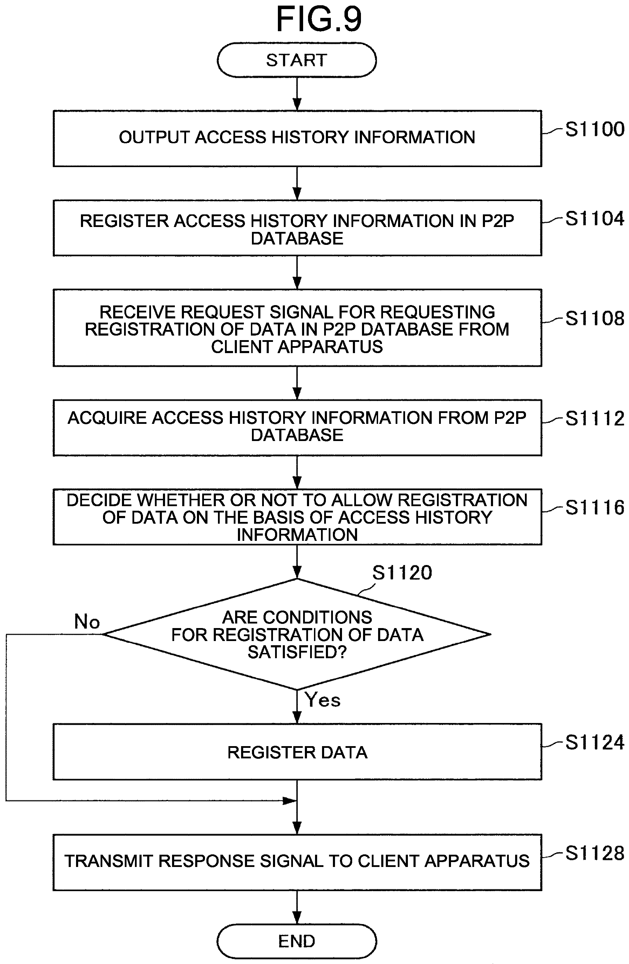

The functional configuration example of the note apparatus 100 according to the present embodiment has been described above. Subsequently, processing flow regarding access control to the P2P database 120 in the present embodiment will be described with reference to FIG. 9. FIG. 9 is a flowchart illustrating an example of processing regarding access control to be performed when data is registered in the P2P database 120.

In step S1100, the history acquiring unit 121a outputs access history information (second history information) by tallying access to the P2P database 120 performed in the past in advance. In step S1104, the history registering unit 121c registers the access history information in the P2P database 120.

Thereafter, in step S1108, in a case where the communication unit 130 receives a request signal for requesting registration of data in the P2P database 120 from the client apparatus 200, in step S1112, the history acquiring unit 121a acquires the access history information from the P2P database 120. In step S1116, the access control unit 121b decides whether or not to allow registration of data in the P2P database 120 on the basis of the access history information.

In a case where it is decided that conditions for registration of data in the P2P database 120 are satisfied on the basis of the access history information (step S1120: Yes), in step S1124, the access control unit 121b registers data in the P2P database 120. In step S1128, a series of processing is finished by the control unit 110 generating a response signal including request result information indicating that data registration is successful and transmitting the signal to the client apparatus 200 via the communication unit 130. Note that, in a case where it is decided in step S1120 that the conditions for registration of data in the P2P database 120 are not satisfied on the basis of the access history information (step S1120: No), in step S1128, the control unit 110 generates a response signal including request result information indicating that data registration is failed and transmits the signal to the client apparatus 200 via the communication unit 130 without data registration being performed.

Note that respective steps in the flowchart in FIG. 9 do not necessarily have to be processed in chronological order in accordance with the described order. That is, the respective steps in the flowchart may be processed in order different from the described order or may be processed in parallel.

### <4. Hardware configuration example>

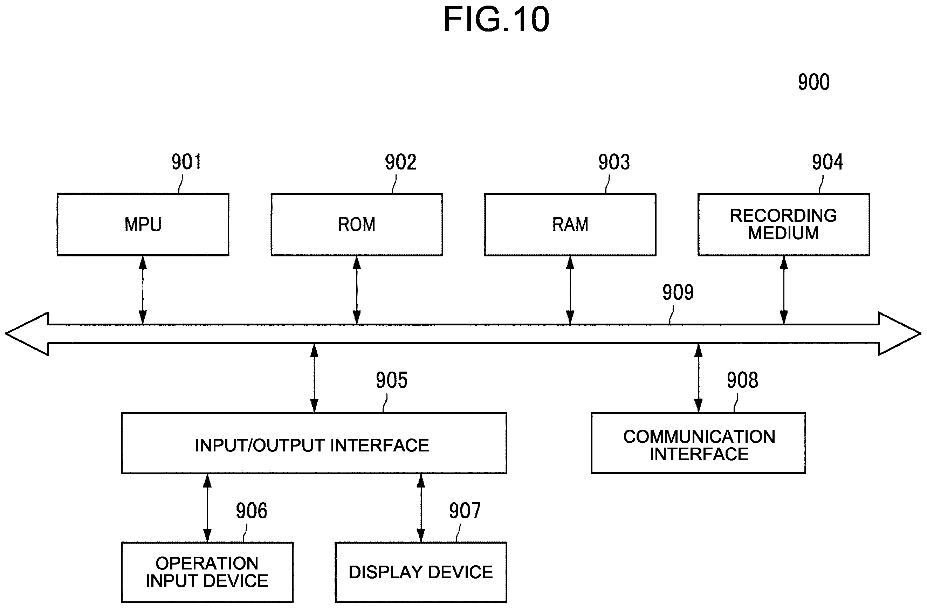

The second embodiment of the present disclosure has been described above. Subsequently, hardware configurations of the respective apparatuses will be described with reference to FIG. 10.

FIG. 10 is a block diagram illustrating an example of a hardware configuration of the node apparatus 100 or the client apparatus 200 according to the first embodiment or the second embodiment. These apparatuses can be embodied by an information processing apparatus 900 illustrated in FIG. 10.

The information processing apparatus 900 includes, for example, an MPU 901, a ROM 902, a RAM 903, a recording medium 904, an input/output interface 905, an operation input device 906, a display device 907 and a communication interface 908. Further, in the information processing apparatus 900, for example, respective components are connected with a bus 909 as a data transmission path.

The MPU 901 is, for example, constituted with one or two or more processors, various kinds of processing circuits, or the like, which are constituted with arithmetic circuits such as MPUs, and functions as the control unit 110 the node apparatus 100 or the control unit 210 of the client apparatus 200. Note that these functional components may be constituted with dedicated (or general-purpose) circuits (such as, for example, processors different from the MPU 901) which can realize various kinds of processing described above.

The ROM 902 stores control data, or the like, such as programs, operation parameters, or the like, to be used by the MPU 901. The RAM 903, for example, temporarily stores programs, or the like, to be executed by the MPU 901.

The recording medium 904 functions as the P2P database 120 of the node apparatus 100 or the storage unit 240 of the client apparatus 200, and stores various kinds of data such as data regarding information processing according to each embodiment and various kinds of programs. Here, examples of the recording medium 904 can include, for example, a magnetic recording medium such as a hard disk, and a non-volatile memory such as a flash memory. Further, the recording medium 904 may be detachable from the information processing apparatus 900.

The input/output interface 905 connects, for example, an operation input device 906 and a display device 907. Here, examples of the input/output interface 905 can include, for example, a universal serial bus (USB) terminal, a digital visual interface (DVI) terminal, a high-definition multimedia interface (HDMI) (registered trademark) terminal, various kinds of processing circuits, or the like.

Further, the operation input device 906 is, for example, provided on the information processing apparatus 900, and is connected to the input/output interface 905 inside the information processing apparatus 900. Examples of the operation input device 906 can include, for example, a keyboard, a mouse, a keypad, a touch panel, a microphone, an operation button, a cursor key, a rotary selector such as a jog dial, combination of these, or the like. The operation input device 906 functions as the input unit 220 of the client apparatus 200.

Further, the display device 907 is, for example, provided on the information processing apparatus 900, and is connected to the input/output interface 905 inside the information processing apparatus 900. Examples of the display device 907 can include, for example, a liquid crystal display, an organic electro-luminescence (EL) display, or the like. The display device 907 functions as the output unit 230 of the client apparatus 200.

Note that it goes without saying that the input/output interface 905 can be connected to an external device such as an operation input device and an external display device outside the information processing apparatus 900. Further, the display device 907 may be a device such as, for example, a touch panel, which can perform display and allows user operation.

The communication interface 908 is communication means provided at the information processing apparatus 900 and functions as the communication unit 130 the node apparatus 100 or the communication unit 250 of the client apparatus 200. Further, the communication interface 908 may have a function of performing communication in a wireless or wired manner, for example, with an arbitrary external apparatus such as a server via an arbitrary network (or directly). Here, examples of the communication interface 908 can include, for example, a communication antenna and a radio frequency (RF) circuit (wireless communication), an IEEE802.15.1 port and a transmission/reception circuit (wireless communication), an IEEE802.11 port and a transmission/reception circuit (wireless communication), a local area network (LAN) terminal and a transmission/reception circuit (wired communication), or the like.

Note that the hardware configuration of the information processing apparatus 900 is not limited to the configuration illustrated in FIG. 10. For example, in a case where the information processing apparatus 900 performs communication via a connected external communication device, the information processing apparatus 900 does not include the communication interface 908. Further, the communication interface 908 may have a configuration which enables communication using a plurality of communication schemes. Further, the information processing apparatus 900, for example, does not have to include the operation input device 906, the display device 907, or the like. Further, for example, part or all of the components illustrated in FIG. 10 may be realized with one or two or more integrated circuits (ICs).

### <5. Remarks>

A case has been described above where the node apparatus 100 controls access to the P2P database 120 by a user (that is, entity) on the basis of the access history information. Here, response in a case where the user is not allowed to access the P2P database 120 will be described.

While there can be various aspects of the response, for example, the user who has not been allowed to access the P2P database 120 may be allowed to access the P2P database 120 by obtaining approval from an administrator of the node apparatus 100 (or the information processing system) using a predetermined method. In this case, by the client apparatus 200 putting allowance information provided from the administrator in the request signal, the node apparatus 100 allows access to the P2P database 120 on the basis of the allowance information.

Further, the user who has not been allowed to access the P2P database 120 may be allowed to access the P2P database 120 by paying predetermined fees. In this case, payment of predetermined fees may be realized by data regarding assets (such as, for example, coins in Bitcoin) of the user managed by the P2P database 120.

Further, flag information indicating that access to the P2P database 120 is important and urgent may be provided. More specifically, the user who has not been allowed to access the P2P database 120 may be exceptionally allowed to access the P2P database 120 by the flag information being included in the request signal. For example, this scheme is considered to be useful upon occurrence of an incident which involves human lives or a disaster.

Further, in a case where the user has not been allowed to access the P2P database 120, the node apparatus 100 may notify the user of conditions for allowance of access (such as, for example, a type of data for which access is possible, a type of a user (entity), a size of data, and a next timing at which access is possible). Note that, also in a case where the user has been allowed to access the P2P database 120, the node apparatus 100 may notify the user of conditions for subsequent access (such as, for example, a remaining value of the number of times of access which is allowed (in other words, information as to how many more times access is possible)). Note that the node apparatus 100 may make these notifications to a predetermined external apparatus other than the client apparatus 200 (for example, a predetermined server apparatus) instead of making these notifications to the client apparatus 200. By this means, these notifications can be made through predetermined service provided by the external apparatus.

Further, in a case where the user has not been allowed to access the P2P database 120, the node apparatus 100 may perform processing regarding request by the user (such as, for example, registration of data and acquisition of data) by autonomously accessing the P2P database 120 when the state becomes a state where the user is allowed to access the P2P database 120. By this means, the user does not need to retransmit the request signal to the node apparatus 100 using the client apparatus 200.

Note that, while various kinds of processing by the node apparatus 100 described above can be realized by the control unit 110 of the node apparatus 100, the P2P database program 121, or the like, an aspect where the processing can be realized is not necessarily limited to this. For example, various kinds of processing described above may be realized through cooperation between a predetermined server apparatus other than the node apparatus 100 and the node apparatus 100.

### <6. Conclusion>

As described above, the node apparatus 100 according to the present disclosure can tally history information (access history information) regarding access to the P2P database 120 by arbitrary entity and can control new access to the P2P database 120 by the entity on the basis of the tallied access history information (second history information). For example, the node apparatus 100 according to the present disclosure can decide whether or not to allow registration of new data in the P2P database 120 by certain entity by comparing a total number of times of registration of data in the P2P database 120 by the entity in a period of a predetermined length (for example, one day), which is the tallied access history information (second history information), with a predetermined threshold.

In addition, the node apparatus 100 according to the second embodiment outputs second history information by tallying access to the P2P database 120 performed in the past in advance and registers the second history information in the P2P database 120. By this means, it is possible to shorten a period from a time when a request signal is received from the client apparatus 200 until the node apparatus 100 according to the second embodiment performs access control to the P2P database 120 (decides whether or not to allow access).

As described above, the favorable embodiments of the present disclosure have been described in detail with reference to the accompanying drawings, but the technical scope of the present disclosure is not limited to such examples. It is obvious that persons having ordinary knowledge in the technical field of the present disclosure can conceive various changes and alterations within the scope of the technical idea described in the claims, and it is naturally understood that these changes and alterations belong to the technical scope of the present disclosure.

Furthermore, the effects described in the present specification are merely illustrative or exemplary and are not restrictive. That is, the technology according to the present disclosure can exhibit other effects obvious to those skilled in the art from the description of the present specification in addition to or in place of the above-described effects.

Note that the following configuration also belong to the technical scope of the present disclosure.
(1) An information processing apparatus comprising:
   an access control unit configured to control new access to a P2P database by arbitrary entity on a basis of history information regarding access to the P2P database by the entity.
(2) The information processing apparatus according to (1),
   wherein the access control unit decides whether or not to allow the new access on a basis of the history information.
(3) The information processing apparatus according to (1) or (2),
   wherein the access includes at least one of registration of data in the P2P database or acquisition of data from the P2P database.
(4) The information processing apparatus according to (3),
   wherein the access control unit controls the new access on a basis of at least one of a total number of times of the access performed in past, a total number of times of the access performed in a period of a predetermined length, a total size of the data in the access performed in past, or a total size of the data in the access performed in the period of the predetermined length, as the history information.
(5) The information processing apparatus according to (3) or (4),
   wherein the access control unit changes control logic of the new access in accordance with a type of the data or a type of the entity.
(6) The information processing apparatus according to any one of (1) to (5),
   wherein the history information includes second history information obtained by tallying first history information regarding each of a plurality of times of the access performed in past by the entity.
(7) The information processing apparatus according to (6), further comprising:
   a history registering unit configured to register the second history information in the P2P database,
   wherein the access control unit controls the new access on a basis of the second history information registered in the P2P database.
(8) The information processing apparatus according to any one of (1) to (7),
   wherein the entity includes at least one of a user, a group constituted with a plurality of the users, a predetermined external apparatus, a system constituted with a plurality of the external apparatuses, or software to be used by the external apparatus.
(9) The information processing apparatus according to any one of (1) to (8),
   wherein the access control unit is embodied by a predetermined program which is provided at the P2P database and which is to be executed on the P2P database.
(10) The information processing apparatus according to any one of (1) to (9),
   wherein the P2P database is blockchain data.
(11) An information processing method to be executed by a computer, the information processing method comprising:
   controlling new access to a P2P database by arbitrary entity on a basis of history information regarding access to the P2P database by the entity.
(12) A program for causing a computer to realize:
   controlling new access to a P2P database by arbitrary entity on a basis of history information regarding access to the P2P database by the entity.

### Reference Signs List

- 100: NODE APPARATUS
- 110: CONTROL UNIT
- 120: P2P DATABASE
- 121: P2P DATABASE PROGRAM
- 121a: HISTORY ACQUIRING UNIT
- 121b: ACCESS CONTROL UNIT
- 121c: HISTORY REGISTERING UNIT
- 130: COMMUNICATION UNIT
- 200: CLIENT APPARATUS
- 210: CONTROL UNIT
- 220: INPUT UNIT
- 230: OUTPUT UNIT
- 240: STORAGE UNIT
- 250: COMMUNICATION UNIT
- 300: P2P NETWORK
- 400: NETWORK

## Claims

1. An information processing apparatus comprising:
an access control unit configured to control new access to a P2P database by arbitrary entity on a basis of history information regarding access to the P2P database by the entity.

2. The information processing apparatus according to claim 1,
wherein the access control unit decides whether or not to allow the new access on a basis of the history information.

3. The information processing apparatus according to claim 1,
wherein the access includes at least one of registration of data in the P2P database or acquisition of data from the P2P database.

4. The information processing apparatus according to claim 3,
wherein the access control unit controls the new access on a basis of at least one of a total number of times of the access performed in past, a total number of times of the access performed in a period of a predetermined length, a total size of the data in the access performed in past, or a total size of the data in the access performed in the period of the predetermined length, as the history information.

5. The information processing apparatus according to claim 3,
wherein the access control unit changes control logic of the new access in accordance with a type of the data or a type of the entity.

6. The information processing apparatus according to claim 1,
wherein the history information includes second history information obtained by tallying first history information regarding each of a plurality of times of the access performed in past by the entity.

7. The information processing apparatus according to claim 6, further comprising:
a history registering unit configured to register the second history information in the P2P database,
wherein the access control unit controls the new access on a basis of the second history information registered in the P2P database.

8. The information processing apparatus according to claim 1,
wherein the entity includes at least one of a user, a group constituted with a plurality of the users, a predetermined external apparatus, a system constituted with a plurality of the external apparatuses, or software to be used by the external apparatus.

9. The information processing apparatus according to claim 1,
wherein the access control unit is embodied by a predetermined program which is provided at the P2P database and which is to be executed on the P2P database.

10. The information processing apparatus according to claim 1,
wherein the P2P database is blockchain data.

11. An information processing method to be executed by a computer, the information processing method comprising:
controlling new access to a P2P database by arbitrary entity on a basis of history information regarding access to the P2P database by the entity.

12. A program for causing a computer to realize:
controlling new access to a P2P database by arbitrary entity on a basis of history information regarding access to the P2P database by the entity.
